# EUROPEAN PATENT SPECIFICATION

(11) **EP 2 284 926 B1**
(45) Date of publication and mention of the grant of the patent: **04.04.2018**
(21) Application number: 10251430.4
(22) Date of filing: 11.08.2010
(51) Int. Cl.: H01M 2/04, H01M 2/08, H01M 2/34, H01M 10/42

(54) **Secondary battery**
Sekundärbatterie
Batterie secondaire

(30) Priority: 11.08.2009 US 272046; 14.07.2010 US 805137
(43) Date of publication of application: 16.02.2011
(73) Proprietor: Samsung SDI Co., Ltd., Gyeonggi-do (KR)
(72) Inventor: Lee, Sangjoo, Yongin-si Gyeonggi-do (KR); Yoon, Heuisang, Gyeonggi-do (KR); Baek, Woon-Seong, Yongin-si, Gyeonggi-do (KR)
(74) Representative: Mounteney, Simon James

(56) References cited:
- JP-A- 2003 132 860
- US-A1- 2005 112 456
- US-A1- 2008 116 851
- 3m(TM): "Product Description", , 1 October 2014 (2014-10-01), XP055152338, Retrieved from the Internet: URL:http://multimedia.3m.com/mws/media/671 00O/3mtm-vhb-tapes.pdf [retrieved on 2014-11-11]

## Description

The present invention relates to a secondary battery.

### Background Art

A secondary battery may be overcharged or overdischarged during charging and discharging. The overcharge and overdischarge cause gas to be generated from the electrolyte or heat, resulting in inferior performance and/or damage to the battery. Thus, secondary batteries include a protective circuit module (PCM) in order to prevent the overcharge and overdischarge. The PCM stops the charging or discharging when the overcharge or the overdischarge of the secondary battery is detected.

Secondary batteries also typically include a secondary protective device such as a fuse to prevent the secondary battery from being damaged due to heat. The secondary protective device detects heat from a bare cell and interrupts electric current of the bare cell when temperature of the bare cell exceeds a preset temperature or overcurrent flows through the bare cell.

When the secondary protective device is exposed to temperature relatively higher than room temperature and is damaged during the manufacturing process, the secondary protective device may not thereafter operate normally.

US 2005/0112456 discloses a battery pack in which constituent elements are united by filling with resin to reduce size and improve rigidity.

The present invention sets out to provide a secondary battery wherein its fuse is prevented from contacting resin in order to avoid the fuse from being damaged during manufacture.

Moreover, the present invention sets out to provide a secondary battery in which heat transferred from resin to a fuse is minimized, in order to prevent the fuse from being damaged during manufacture.

Particularly, but not exclusively, the invention sets out to avoid such damage during a hot melt process used to form a cover of the battery.

Accordingly, the invention provides a secondary battery as set out in Claim 1. Preferred features of the invention are set out in Claims 2 to 13. The first insulating member insulates the fuse from heat during the manufacturing process. Because the first insulating layer has multiple layers, it can provide improved insulating properties and greater strength.

### Brief Description of the Drawings

Objects, features and advantages of the present invention will become more apparent from reading the following detailed description in conjunction with the accompanying drawings, in which:
FIG. 1 is an exploded perspective view illustrating a secondary battery;
FIG. 2 is a partial front view illustrating an assembly of the secondary battery of FIG. 1;
FIG. 3 is a partial perspective view illustrating the assembly of the secondary battery of FIG. 1;
FIG. 4 is a perspective view illustrating the top tape and a fuse of the secondary battery of FIG. 1;
FIG. 5 is a perspective view illustrating a top tape and a fuse of a secondary battery according to the present invention;
FIG. 6 is a perspective view illustrating a top tape and a fuse of a secondary battery according to another embodiment of the present invention; and
FIG. 7 is a perspective view illustrating a top tape and a fuse of a secondary battery according to still another embodiment of the present invention.

### Detailed Description

Hereinafter, the structure of a secondary battery according to the present invention will be described with reference to the accompanying drawings.

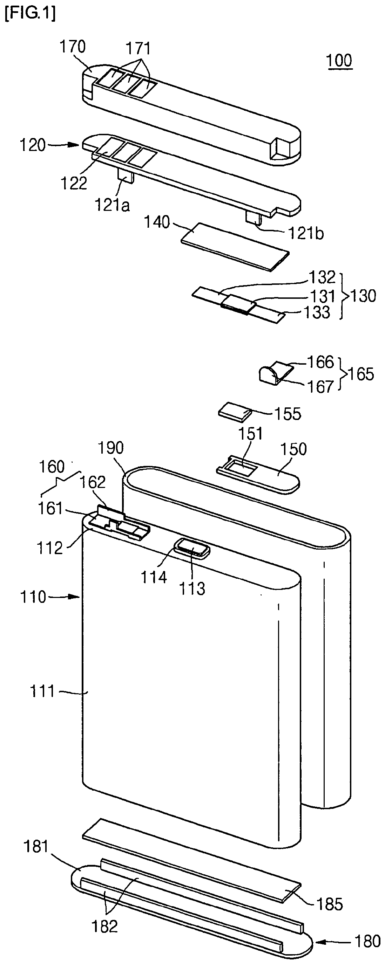

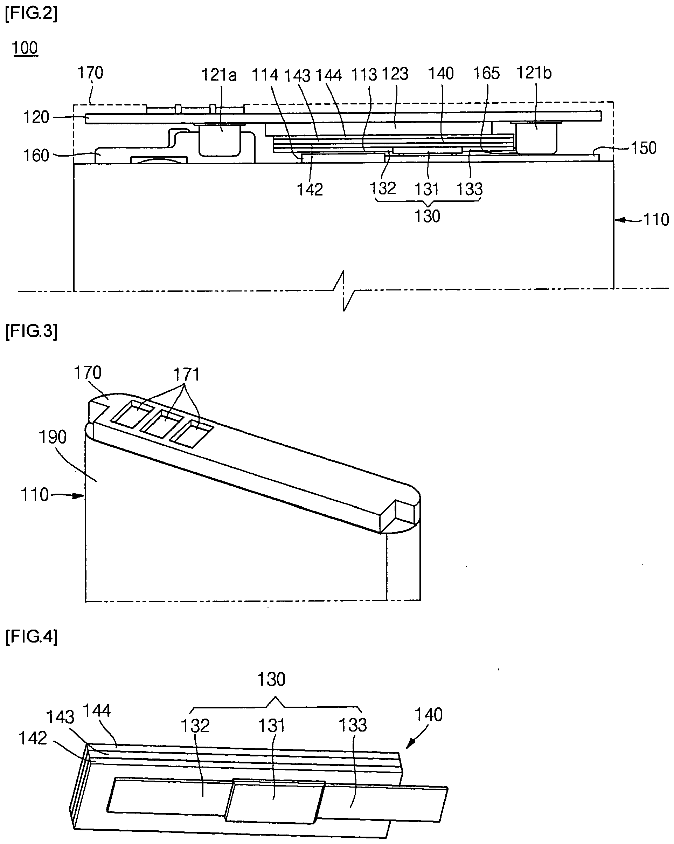

FIG. 1 is an exploded perspective view illustrating a secondary battery. FIG. 2 is a partial front view illustrating an assembly of the secondary battery of FIG. 1. FIG. 3 is a partial perspective view illustrating the assembly of the secondary battery of FIG 1.

Referring to FIGS. 1 to 3, the secondary battery 100 includes a bare cell 110, a protective circuit module (PCM) 120, a fuse 130, a top tape 140, a bottom tape 150, and a top cover 170. The secondary battery 100 further includes a first lead plate 160, a second lead plate 165, a bottom cover 180, and a label 190.

The fuse 130 is disposed between the bare cell 110 and the PCM 120. The top tape 140 and the bottom tape 150 are disposed on the top and the bottom of the fuse 130, respectively. In this particular embodiment, the top tape 140 fills a space defined between the fuse 130 and the PCM 120 on the whole. Thus, the top tape 140 prevents the fuse 130 from contact hot melt resin and heat from being transferred from the hot melt resin to the fuse 130 during hot melt process. In other embodiments the tape does not fill the space.

The bare cell 110 includes a can 111, a cap plate 112, an electrode terminal 113, and a gasket 114. In general, the bare cell 110 may have various shapes to form a common lithium secondary battery.

The can 111 has a hollow inner space, a closed bottom, and an open top. The can 111 accommodates an electrode assembly having a positive electrode plate (not shown), a separator (not shown), and a negative electrode plate (not shown).

The cap plate 112 is a plate made of electrically conductive metal. The cap plate 112 covers the open top of the can 111. The cap plate 112 is connected to the positive electrode plate to serve as a positive electrode. In an alternative embodiment, the cap plate 112 may be connected to the negative electrode plate and serve as a negative electrode.

The electrode terminal 113 is made of electrically conductive metal. The electrode terminal 113 has an approximately cylindrical shape. The electrode terminal 113 is electrically insulated from the cap plate 112 and extends through the cap plate 112 from the bottom to the top of the cap plate 112 in a central region of the cap plate 112. The electrode terminal 113 is connected to the negative electrode plate to serve as a negative electrode. In alternative embodiments, the electrode terminal 113 can be connected to the positive electrode plate, and serve as a positive electrode.

The gasket 114 is made of electric insulation resin or rubber. The gasket 114 is disposed between the cap plate 112 and the electrode terminal 113. Thus, the gasket 114 electrically insulates the cap plate 112 from the electrode terminal 113.

The PCM 120 includes a protective circuit (not shown), a first tab 121a, a second tab 121b, and an external terminal 122. The PCM 120 is spaced apart from the top of the bare cell 110. The PCM 120 controls overall operation including charge and discharge of the secondary battery 100.

The protective circuit includes a control device (not shown) and a switching device (not shown). The protective circuit substantially controls overall operation of the secondary battery 100. Thus, the protective circuit controls the charge and discharge of the secondary battery 100. Moreover, the protective circuit controls the charge and discharge of the secondary battery 100 to prevent the secondary battery 100 from being damaged during the overcharge or the overdischarge.

The first tab 121a extends downwardly from a side of the bottom surface of the PCM 120. In an alternative embodiment it may extend from a top surface of the PCM 120. The first tab 121a is electrically connected to the protective circuit. In an alternative embodiment it may be connected to the external terminal 122. The first tab 121a is electrically connected to the bare cell 110 by the first lead plate 160. Thus, the first tab 121a electrically connects a positive electrode of the bare cell to the protective circuit.

The second tab 121b extends downwardly from the opposite side of the bottom surface of the PCM 120. In an alternative embodiment, it may extend from a top surface. The second tab 121b is electrically connected to the protective circuit. The second tab 121b is also electrically connected to the fuse 130 and the second lead plate 165.

The external terminal 122 is formed on the top surface of the PCM 120. The external terminal 122 electrically connects an external device (not shown) to the secondary battery 100.

Control element and/or switching element 113 of the protective circuit 120 can be seen in Figure 2.

The fuse 130 includes a main body 131, a first lead 132, and a second lead 133. The fuse 130 is positioned between the bare cell 110 and the PCM 120 in the vertical direction. The fuse 130 is positioned between the electrode terminal 113 and the second tab 121b in the horizontal direction.

The fuse 130 is electrically connected to the PCM 120 through the second lead plate 165 and the second tab 121b. The fuse 130 is electrically connected to the electrode terminal 113. Thus, the fuse 130 electrically connects the bare cell 110 to the PCM 120. When temperature of the bare cell 110 increases or overcurrent flows through the bare cell 110, the main body 131 is opened and the fuse 130 interrupts the current between the bare cell 110 and the PCM 120.

The main body 131 is made of electrical conductive wire (not shown) that melts at a preset temperature and insulation resin surrounding the conductive wire. The wire of the main body 131 may be made of metal such as an alloy of lead and tin. Moreover, the main body 131 may be made of various materials used in the fuse 130.

The first lead 132 is made of an electrical conductive metal plate. The first lead 132 has one side electrically connected to the electrode terminal 113 and an opposite side electrically connected to the main body 131.

The second lead 133 is made of an electrical conductive metal plate. The second lead 133 has one side electrically connected to the main body 131 and an opposite side electrically connected to the second lead plate 165.

The top tape 140 includes a first layer 142, a second layer 143, and a third layer 144. The top tape 140 is configured such that the first and third layers have heat resistance superior than that of the second layer. Thus, the second layer 143 of the top tape 140 is prevented from being damaged due to heat of the resin during the hot melt process by the first layer 142 and the third layer 144. The top tape 140 more effectively interrupts heat transfer from the resin to the fuse 130 during the hot melt process through the second layer 143.

The first layer 142 forms the bottom of the top tape 140 and is adhered to the top surface of the fuse 130. The third layer 144 forms the top of the top tape 140 and contacts the bottom surface of the PCM 120.

The first and third layers 142 and 144 are made of material having heat resistance superior than that of the second layer 143. For example, the first and third layers 142 and 144 may be made of polyethyleneterephthalate (PET) with excellent heat resistance. Thus, in the top tape 140, the first and third layers 142 and 144 contacting the resin have high heat resistance and damage caused by heat of the resin may be minimized.

Meanwhile, the second layer 143 is made of a foam tape having fine pores. The second layer 143 absorbs the heat of the resin through the fine ores. The second layer 143 has heat insulation superior than the first layer 142 and third layer 144. Thus, the top tape 140 protects the main body 131 of fuse 130 from hot melt by providing the second layer 143 between the first layer 142 and the third layer 444.

The top tape 140 has an approximately plate-like shape, and has an area corresponding to a horizontal area of the main body 131, so as to cover the main body 131 of the fuse 130. The top tape 140 also covers some or all of the first lead 132 and the second lead 133.

The top tape 140 has a height corresponding to a space defined by the PCM 120 and the main body 131. Thus, the top tape 140 fills some of the space between the PCM 120 and the main body 131. Moreover, the top tape 140 fills a space formed among the PCM 120 and the first and second leads 132 and 133 of the fuse 130.

At least one layer of the top tape 140 may be made of elastic material and the top tape 140 may then have a height higher than a height of the space between the PCM 120 and the main body 131. The top tape 140 may contact a side surface of the main body 131 while filling the space between the PCM 120 and the main body 131. Therefore, the top tape 140 may minimize exposure of a side surface of the main body 131.

The top tape 140 interrupts hot resin introducing into a top space of the main body 131 during a hot melt process used for forming the top cover 170. In a case where the top tape 140 directly contacts the bottom surface of the PCM 120 and the top surface of the main body 131, the resin that is introduced into the top space of the main body 131 is more effectively interrupted. In a case where the top tape 140 contacts a side surface of the main body 131, resin that is introduced into the side surface of the main body 131 is effectively interrupted. The top tape 140 prevents the high temperature resin from directly contacting the main body 131. Thus, the main body 131 is neither deteriorated nor damaged during the hot melt process.

The bottom tape 150 may be made of electric insulation material. The bottom tape 150 may be made of heat resistant material. The bottom tape 150 also may be made of polyethyleneterephthalate (PET).

The bottom tape 150 has an approximately plate-liked shape. The bottom tape 150 has an areagreater than whole area of the main body 131, the first lead 132, and the second lead 133.

The bottom tape 150 may be generally made of a single material. The bottom tape 150 further includes a through-hole 151 and a heat conducting plate 155.

The bottom tape 150 is disposed between the bare cell 110 and the fuse 130, and a portion of the top surface of the bottom tape 150 generally contacts the bottom surface of the fuse 130. The bottom tape 150 may be made of elastic material to contact a side surface of the fuse 130.

The bottom tape 150 electrically insulates the fuse 130 from the cap plate 112 of the bare cell 110. The bottom tape 150 interrupts high temperature resin from being introduced into the lower space of the main body 131 during the hot melt process used for forming the top cover 170. Moreover, in a case where the bottom tape 150 directly contacts the top surface of the bare cell 110 and the bottom surface of the main body 131, the resin introduced into the lower space of the main body 131 is more effectively interrupted. In a case where the bottom tape 150 contacts the side surface of the main body 131, the resin introduced into the side space of the main body 131 is also effectively interrupted. The bottom tape 150 prevents the high temperature resin from directly contacting the main body 131. Thus, the main body 131 is prevented from being damaged or opened during the hot melt process.

The through-hole 151 passes from the top to the bottom of the bottom tape 150 and has an area corresponding to that of the main body 131. The through-hole is formed in a region corresponding to a region where the main body 131 is disposed. The through-hole 151 exposes the bottom surface of the main body 131 which is seated on the bottom tape 150 toward the bare cell 110. Therefore, when the bottom tape 150 has a lower thermal conductivity, heat is more effectively transferred from the bare cell 110 to the main body 131.

The heat conducting plate 155 has an area corresponding to that of the through-hole 151. The heat conducting plate 155 has the same thickness as that of the bottom tape 150. The heat conducting plate 155 is made of material with thermal conductivity higher than that of air. The heat conducting plate 155 is inserted into the through-hole 151. The heat conducting plate 155 is configured such that the bottom surface of the heat conducting plate 155 contacts the top surface of the bare cell 110 and the top surface thereof contacts the main body 131. The heat conducting plate 155 transfers heat from the bare cell to the main body 131. Thus, the main body 131 more effectively reacts to heat from the bare cell 110.

The heat conducting plate 155 may be made by filling the through-hole 151 with thermally conductive adhesive. In a case where the heat conducting plate 155 is made of thermally conductive adhesive, the fuse 130 may be easily fixed to the bottom tape 150.

The first lead plate 160 is made of electrically conductive metal. For example, the first lead plate 160 may be made of metal such as nickel or nickel alloy. The first lead plate 160 includes a first horizontal portion 161 contacting the cap plate 112 and a first vertical portion 162 upwardly extending from the first horizontal portion 161. However, the first horizontal portion 161 and the first vertical portion 162 of the first lead plate 160 may have various shapes and are not limited to the shape illustrated in FIG. 1.

The first lead plate 160 is positioned at a side of the top surface of the cap plate 112 and is electrically connected to the cap plate 112. The first lead plate 160 is electrically connected to the first tab 121a. In more detail, the horizontal portion 161 of the first lead plate 160 is coupled to the top surface of the cap plate 112, so as to be electrically connected thereto. The vertical portion 162 of the first lead plate 160 is electrically connected to the first tab 121a.

The first lead plate 160 supports the PCM 120, so as to be spaced apart from the top surface of the bare cell 110. Thus, an internal space is defined between the bare cell 110 and PCM 120, and the fuse 130 and other various devices forming the protective circuit are mounted in the internal space.

The first horizontal portion 161 of the first lead plate 160 may be coupled to the top surface of the cap plate 112 by laser welding or resistance welding. The first vertical portion 162 of the first lead plate 160 may be coupled to the first tab 121a by laser welding or resistance welding.

The second lead plate 165 is made of electric conductive metal. For example, the second lead plate 165 may be made of metal such as nickel or nickel alloy. The second lead plate 165 may includes a second horizontal portion 166 seated on the top of the bottom tape 150 and a second vertical portion 167 upwardly extending from the second horizontal portion 166. The horizontal portion and the vertical portion of the second lead plate 165 may have various alternative shapes and are not limited to the shape illustrated in FIG. 1.

The second lead plate 165 is electrically connected to the second lead 133 of the fuse 130 on the bottom tape 150. The second lead plate 165 is electrically connected to the second tab 121b. In more detail, the second lead plate 165 is coupled to and electrically connected to the second lead 133 by which the horizontal portion 166 is seated on the top surface of the bottom tape 150. The vertical portion 167 of the second lead plate 165 is electrically connected to the second tab 121b.

The second lead plate 165 cooperates with the first lead plate 160 to support the PCM 120 to be spaced apart from the top surface of the bare cell 110. Thus, an internal space is defined between the bare cell 110 and the PCM 120 and the fuse 130 and other various devices forming the protective circuit are mounted in the internal space.

The second horizontal portion 166 of the second lead plate 165 may be coupled to the second lead 133 of the fuse 130 by laser welding or resistance welding. The second vertical portion 167 of the second lead plate 165 may be coupled to the second tab 121b by laser welding or resistance welding.

The top cover 170 surrounds the PCM 120, the fuse 130, the top tape 140, and the bottom tape 150 from the top of the bare cell 110. The top cover 170 includes an external terminal hole 171 to expose the external terminal 122 of the PCM 120. The top cover 170 is manufactured using a hot melt process. That is, the top cover 170 is made by a process in which resin heated at a preset temperature is injected into a region including the space defined between the bare cell 110 and the PCM 120. Since the hot melt process is generally used for manufacturing a secondary battery, the detailed description will be omitted.

The resin injected during the hot melt process has temperature of about 200 Celsius degrees and the temperature at which the fuse 130 opens is lower than 200 Celsius degrees. Thus, when the main body 131 directly contacts the resin, the main body 131 may be damaged. The top tape 140 prevents the main body 131 of the fuse 130 from being exposed to the high temperature resin during the hot melt process. Thus, the fuse 130 may be prevented from being damaged during the hot melt process.

The bottom cover 180 includes a base 181 and an extension 182. The bottom cover 180 further includes an adhesive tape 185. The bottom cover 180 is made of electric insulation resin. The bottom cover 180 is coupled to the bottom of the bare cell 110 to electrically insulate the bottom of the bare cell 110 from the outside. The bottom cover 180 may be preformed or may be made of hot melt when the top cover 170 is formed.

The base 181 has a shape and an area corresponding to those of the bottom of the bare cell 110. The base 181 is coupled to the bottom of the bare cell 110 by an adhesive tape.

The extension 182 extends from the top surface of the base 181 upwardly. The extension 182 contacts sides of the bare cell 110 such that the bottom cover 180 is more securely coupled to the bare cell 110.

The adhesive tape 185 is made of a tape having double-sided adhesive layers. The adhesive tape 185 is adhered to the top surface of the base 181 and the bottom surface of the bare cell 110.

The label 190 is made of a film with an adhesive layer. The label 190 is adhered to side surfaces of the top cover 170, the bare cell 110, and the bottom cover 180 to surround the same. Thus, the label 190 securely couples the top cover 170, the bare cell 110, and the bottom cover 180 with each other. The label 190 may be of the kind employed in a lithium secondary battery, and its detailed description will hence be omitted.

Although the above embodiment comprises a PCM located within a top cover, the invention is equally applicable to other cover/PCM configurations.

Hereinafter, secondary batteries according to the present invention will be described. These secondary batteries have top tapes that differ from those illustrated in FIGS. 1 to 3, but the other features are the same. Therefore, hereinafter the description will be focused on the top tape. Moreover, the same reference numerals are assigned to the same components of the secondary battery according to the embodiment of the present invention as illustrated in FIGS. 1 to 3.

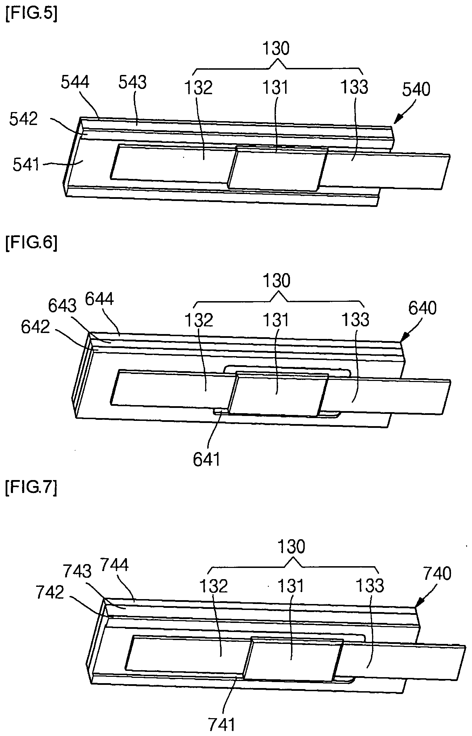

FIG. 5 is a perspective view illustrating a top tape and a fuse of a secondary battery according to an embodiment of the present invention.

Referring to FIG. 5, the top tape 540 of this embodiment includes a first layer 542, a second layer 543 and a third layer 544. The first layer 542 also includes a device recess 541. The top tape 540 is identical to the top tape 140 of the embodiment of the invention as illustrated in FIGS. 1 to 3, except for the device recess 541.

The device recess 541 extends from one side to the opposite side of the bottom surface of the top tape 540. That is, the device recess 541 is open toward the one side and the opposite side of the top tape 540. The device recess 541 is larger than a width of the fuse 130. The device recess 541 has a depth corresponding to the height of the fuse 130. Thus, the device recess 541 accommodates the fuse 130.

The top tape 540 is adhered to the bottom tape 150 such that the fuse 130 is accommodated in the device recess 541. Thus, the top tape 540 more effectively prevents the main body 131 of the fuse 130 from contacting the introduced resin during the hot melt process. More especially, the top tape 540 effectively interrupts the resin from being introduced into the main body 131 between the top tape 540 and the bottom tape 150 from the front side to the rear side. Since the fuse 130 does not contact the resin during the hot melt process, the fuse 130 is not damaged.

As a variation, it is possible to configure the device recess such that it is opened to bothsides.

It is also possible for the device recess to be formed in the second layer 543, as well as the first layer 542.

FIG. 6 is a perspective view illustrating a top tape and a fuse of a secondary battery according to another embodiment of the present invention.

Referring to FIG. 6, the top tape 640 of a secondary battery according to this embodiment of the present invention includes a device recess 641. The top tape 640 is identical to the top tape 140 as illustrated in FIGS. 1 to 3, except for the device recess 641.

Referring to FIG. 6, the top tape 640 includes a device recess 641, a first layer 642, a second layer 643, and a third layer 644. That is, the top tape 640 includes the device recess on which the main body 131 of the fuse 130 is seated. Thus, the top tape 640 accommodates the main body 131 of the fuse 130 in the device recess 641 completely. Thus, the top tape 640 more effectively interrupts heat transfer from the resin to the main body 131 of the fuse 130 during the hot melt process.

The device recess 641 is formed in an approximately central region of the bottom surface of the top tape 640. That is, the device recess 641 is not open toward a side of the top tape 640. The device recess 641 has an area larger than that of the main body 131. The device recess 641 has a depth corresponding to the height of the main body 131. Thus, the device recess 641 accommodates the main body 131 completely. Meanwhile, the first lead 132 and the second lead 133 of the fuse 130 contact the bottom surface of the top tape 640.

The top tape 640 is adhered to the bottom tape 150 while the main body 131 is accommodated in the device recess 641. Thus, the top tape 640 effectively interrupts the main body 131 from contacting the introducing resin during the hot melt process. More especially, the top tape 640 effectively interrupts the resin from being introduced into the main body 131 from the front side, the rear side, and both lateral sides. Since the fuse 130 does not contact the resin during the hot melt process, the fuse 130 is not damaged.

In this embodiment, the device recess 641 is accommodated in the first layer 642. It may however extend into the second layer 643.

Next, a top tape of a secondary battery according to still another embodiment of the present invention will be described.

Referring to FIG. 7, a top tape 740 of a secondary battery according to still another embodiment of the present invention includes a device recess 741, a first layer 742, a second layer 743, and a third layer 744. That is, the top tape 740 includes the device recess 741 on which at least one portion of the fuse 130 is seated. Thus, the top tape 740 accommodates the main body 131 and the first lead 132 of the fuse 130 in the device recess 741.

The device recess 741 is similar to the device recess 641 of the embodiment of the present invention as illustrated in FIG. 6. However, the device recess 741 has a shape that a side of the top tape 740 is opened. In more detail, the device recess 741 has an open side to which the first lead 132 of the fuse 130 extends. Thus, in the top tape 740, a region in which the first lead coupled with the electrode terminal 113 does not protrude upward. Moreover, the top tape 740 may effectively interrupt the resin from being introduced into an opposite side without a structure of interrupting flow of the resin such as the electrode terminal. The device recess 741, as illustrated in FIG. 7, may be formed on the first layer 742. Moreover, the device recess 741 may be formed in the first layer 742 and the second layer 743.

The first to third layers 742, 743, and 744 may be identical or similar to the first to third layers 642, 643, and 644 which are formed in the top tape 640 of the embodiment of the present invention as illustrated in FIG. 6. The first and third layers 742 and 744 may have heat resistance and heat insulation superior than that of the second layer 743. However, as described above, the device recess 741 may be formed in the first layer 742 or the second layer 743. Therefore, the detailed description of the first to third layers 742, 743, and 744 will be omitted.

Although certain embodiments of the present invention have been described in detail hereinabove, it should be understood that many variations and modifications of the basic inventive concept herein described, which may appear to those skilled in the art, will still fall within the scope of the embodiments of the present invention as defined by the appended claims.

## Claims

1. A secondary battery comprising:
a cover (170;180);
a bare cell (110) having an electrode terminal provided at a surface thereof (113);
a protective circuit module (120) adapted to control charging and discharging of the bare cell (110);
a fuse (130) electrically connected between the bare cell (110) and the protective circuit module (120); and
a first heat insulating member (140) provided between the fuse (130) and the protective circuit module (120);
wherein the protective circuit module (120), the fuse (130) and the first heat insulating member (140) are located within the cover (170), and the first heat insulating member (140) com
prises a plurality of layers,
**characterized in that** said plurality of layers further comprises a contoured layer (542; 642; 742) wherein the contoured layer (542;642;742) comprises a recess (541; 641; 741) that accommodates a main body of the fuse (131).

2. A secondary battery according to claim 1, wherein the first heat insulating member (140) comprises first (142), second (143) and third (144) layers and the second layer (143) is interposed between the first (142) and third (144) layers.

3. A secondary battery according to claim 2, wherein the second layer (143) has a lower thermal conductivity than the first (142) and third (144) layers.

4. A secondary battery according to claim 2 or 3, wherein the first (143) and third (144) layers have a higher resistance to heat damage than the second layer (143).

5. A secondary battery according to any preceding claim, wherein a second heat insulating member (150) is provided between the fuse (130) and the bare cell (110).

6. A secondary battery according to any preceding claim, wherein a heat conducting member (155) is provided between and in contact with the fuse (130) and the bare cell (110).

7. A secondary battery according to claim 6, wherein the heat conducting member (155) takes the form of a heat conducting plate.

8. A secondary battery according to claim 6 or 7 when dependent upon claim 5, wherein the heat conducting member (155) extends through an opening (151) provided in the second heat insulating member (150).

9. A secondary battery according to claim 8, wherein the heat conducting member (155) is formed from a heat conductive adhesive filled in the opening (151).

10. A secondary battery according to claim 1, wherein the recess (541;641;741) also accommodates at least one lead of the fuse (132,133).

11. A secondary battery according to claim 1 or 10, wherein the recess (541;641;741) covers a side surface of the fuse (130).

12. A secondary battery according to any preceding claim, wherein the cover is a top cover (170), the fuse (130) is located over the top of the bare cell (110) and the protective circuit module (120) is located over the top of the fuse (130).

13. A secondary battery according to any preceding claim, wherein the first heat insulating member (140) fills a gap between the fuse (130) and the protective circuit module (120).

## Patentansprüche

1. Sekundärbatterie, Folgendes umfassend:
eine Abdeckung (170; 180);
eine blanke Zelle (110) mit einer Oberfläche (113), an der ein Elektrodenanschluss bereitgestellt ist;
ein schützendes Schaltungsmodul (120), dazu angepasst, das Laden und Entladen der Batteriezelle (110) zu steuern;
eine Sicherung (130), zwischen die blanke Zelle (110) und das schützende Schaltungsmodul (120) elektrisch geschaltet; und
ein erstes wärmeisolierendes Glied (140), zwischen der Sicherung (130) und dem schützenden Schaltungsmodul (120) bereitgestellt;
worin das schützende Schaltungsmodul (120), die Sicherung (130) und das erste wärmeisolierende Glied (140) innerhalb der Abdeckung (170) angeordnet sind und das erste wärmeisolierende Glied (140) eine Vielzahl von Schichten umfasst,
**dadurch gekennzeichnet, dass** die Vielzahl von Schichten außerdem eine formangepasste Schicht (542; 642; 742) umfasst, worin die formangepasste Schicht (542; 642; 742) eine Aussparung (541; 641; 741) umfasst, die einen Hauptkörper der Sicherung (131) aufnimmt.

2. Sekundärbatterie nach Anspruch 1, worin das erste wärmeisolierende Glied (140) erste (142), zweite (143) und dritte (144) Schichten umfasst und die zweite Schicht (143) zwischen den ersten (142) und dritten (144) Schichten eingeschoben ist.

3. Sekundärbatterie nach Anspruch 2, worin die zweite Schicht (143) eine niedrigere Wärmeleitfähigkeit hat als die ersten (142) und dritten (144) Schichten.

4. Sekundärbatterie nach Anspruch 2 oder 3, worin die ersten (143) und dritten (144) Schichten eine höhere Widerstandfähigkeit gegen Wärmeschädigung haben als die zweite (143) Schicht.

5. Sekundärbatterie nach einem vorhergehenden Anspruch, worin ein zweites wärmeisolierendes Glied (150) zwischen der Sicherung (130) und der blanken Zelle (110) bereitgestellt ist.

6. Sekundärbatterie nach einem vorhergehenden Anspruch, worin ein wärmeleitendes Glied (155) zwischen der Sicherung (130) und der blanken Zelle (110) und in Kontakt mit diesen bereitgestellt ist.

7. Sekundärbatterie nach Anspruch 6, worin das wärmeleitende Glied (155) die Form einer wärmeleitenden Platte nimmt.

8. Sekundärbatterie nach Anspruch 6 oder 7 bei Abhängigkeit von Anspruch 5, worin das wärmeleitende Glied durch (155) eine Öffnung (151) verläuft, die im zweiten wärmeisolierenden Glied (150) bereitgestellt ist.

9. Sekundärbatterie nach Anspruch 8, worin das wärmeleitende Glied (155) aus einem wärmeleitenden Klebstoff geformt ist, der in die Öffnung gefüllt wird (151).

10. Sekundärbatterie nach Anspruch 1, worin die Aussparung (541; 641; 741) auch mindestens eine Leitung der Sicherung (132, 133) aufnimmt.

11. Sekundärbatterie nach Anspruch 1 oder 10, worin die Aussparung (541; 641; 741) eine Seitenoberfläche der Sicherung (130) bedeckt.

12. Sekundärbatterie nach einem vorhergehenden Anspruch, worin die Abdeckung eine obere Abdeckung (170) ist, die Sicherung (130) über dem oberen Ende der blanken Zelle (110) angeordnet ist und das schützende Schaltungsmodul (120) über dem oberen Ende der Sicherung (130) angeordnet ist.

13. Sekundärbatterie nach einem vorhergehenden Anspruch, worin das erste wärmeisolierende Glied (140) eine Lücke zwischen der Sicherung (130) und dem schützenden Schaltungsmodul (120) füllt.

## Revendications

1. Batterie secondaire comprenant :
un capot (170 ; 180) ;
une cellule nue (110) ayant une borne d'électrode disposée au niveau d'une surface de celle-ci (113) ;
un module de circuit de protection (120) adapté pour contrôler la charge et la décharge de la cellule nue (110) ;
un fusible (130) relié électriquement entre la cellule nue (110) et le module de circuit de protection (120) ; et
un premier élément thermo-isolant (140) prévu entre le fusible (130) et le module de circuit de protection (120) ;
dans lequel le module de circuit de protection (120), le fusible (130) et le premier élément thermo-isolant (140) sont situés à l'intérieur du capot (170), et le premier élément thermo-isolant (140) comprend une pluralité de couches,
**caractérisé en ce que** ladite pluralité de couches comprend en outre une couche à contours (542 ; 642 ; 742), dans laquelle la couche à contours (542 ; 642 ; 742) comprend un évidement (541 ; 641 ; 741) qui contient un corps principal du fusible (131).

2. Batterie secondaire selon la revendication 1, dans laquelle le premier élément thermo-isolant (140) comprend une première (142), une seconde (143) et une troisième (144) couches et la seconde couche (143) est interposée entre la première (143) et la troisième (144) couches.

3. Batterie secondaire selon la revendication 2, dans laquelle la seconde couche (143) possède une conductivité thermique inférieure à celle de la première (142) et de la troisième (144) couches.

4. Batterie secondaire selon la revendication 2 ou 3, dans laquelle la première (143) et la troisième (144) couches possèdent une plus grande résistance aux dommages thermiques que la troisième couche (143).

5. Batterie secondaire selon l'une quelconque des revendications précédentes, dans laquelle un second élément thermo-isolant (150) est prévu entre le fusible (130) et la cellule nue (110).

6. Batterie secondaire selon l'une quelconque des revendications précédentes, dans laquelle un élément thermo-conducteur (155) est prévu entre et en contact avec le fusible (130) et la cellule nue (110).

7. Batterie secondaire selon la revendication 6, dans laquelle l'élément thermo-conducteur (155) se présente sous la forme d'une plaque thermo-conductrice.

8. Batterie secondaire selon la revendication 6 ou 7 lorsqu'elle dépend de la revendication 5, dans laquelle l'élément thermo-conducteur (155) s'étend dans une ouverture (151) prévue dans le second élément thermo-isolant (150).

9. Batterie secondaire selon la revendication 8, dans laquelle l'élément thermo-conducteur (155) est formé à partir d'un adhésif thermo-conducteur placé dans l'ouverture (151).

10. Batterie secondaire selon la revendication 1, dans laquelle l'évidement (541 ; 641 ; 741) contient également au moins un fil du fusible (132 ; 133).

11. Batterie secondaire selon les revendications 1 ou 10, dans laquelle l'évidement (541 ; 641 ; 741) recouvre une surface latérale du fusible (130).

12. Batterie secondaire selon l'une quelconque des revendications précédentes, dans laquelle le capot est un capot supérieur (170), le fusible (130) est situé par-dessus la cellule nue (110) et le module de circuit de protection (120) est situé par-dessus le fusible (130).

13. Batterie secondaire selon l'une quelconque des revendications précédentes, dans laquelle le premier élément thermo-isolant (140) remplit un espace entre le fusible (130) et le module de circuit de protection (120).
